# EUROPÄISCHE PATENTSCHRIFT

(11) **EP 2 111 180 B1**
(45) Veröffentlichungstag und Bekanntmachung des Hinweises auf die Patenterteilung: **19.09.2018**
(21) Anmeldenummer: 08700976.7
(22) Anmeldetag: 03.01.2008
(51) Int. Cl.: A61C 13/00, A61C 13/01

(54) **VERFAHREN BETREFFEND DIE MODELLIERUNG UND DIE HERSTELLUNG VON EINEM KÜNSTLICHEN GEBISS ODER DESSEM BASISTEIL**
METHOD CONCERNING THE MODELLING AND THE PRODUCTION OF AN ARTIFICIAL DENTURE OR ITS BASE
PROCÉDÉ CONCERNANT LA MODÉLISATION ET LA FABRICATION D'UN DENTIER OU DE SA BASE

(30) Priorität: 03.01.2007 DE 102007001045; 15.01.2007 DE 102007002178
(43) Veröffentlichungstag der Anmeldung: 28.10.2009
(73) Patentinhaber: Institut Straumann AG, 4002 Basel (CH)
(72) Erfinder: HOLZNER, Stephan, 80269 Hohenschäftlarm (DE); WEBER, Gerhard, 86932 Pürgen (DE)
(74) Vertreter: Grünecker Patent- und Rechtsanwälte PartG mbB
(86) Internationale Anmeldenummer: PCT/EP2008/000024
(87) Internationale Veröffentlichungsnummer: WO 2008/081003

(56) Entgegenhaltungen:
- EP-A- 1 243 231
- EP-A- 1 444 965
- WO-A-2008/005432
- DE-A1- 4 025 728
- US-A1- 2003 222 366
- US-A1- 2005 010 450
- US-B1- 6 648 645
- US-B1- 7 153 135

## Beschreibung

Die Erfindung betrifft die Herstellung von künstlichen Gebissen, die ein Basisteil aufweisen, bzw. die Herstellung von einem solchen Basisteil selbst.

Ein künstliches Gebiss wird auch mit dem Begriff "Dritte Zähne" bezeichnet. Ein derartiges künstliches Gebiss hat ein Basisteil, das in der Regel zahnfleischfarben ist und in oder an dem künstliche Zähne vorgesehen sind. Derartige Basisteile müssen jeweils individuell für jeden Patienten einzeln angefertigt werden. Das Basisteil wird auf ein Zahnfleischareal, in dem Zähne fehlen, aufgesetzt. Es kann für einen Ober- oder für einen Unterkiefer vorgesehen sein.

Die hier behandelten künstlichen Gebisse sind zum Herausnehmen vorgesehen. Sie werden auf dem Zahnfleisch z.B. durch Haftcremes gehalten.

EP 1 444 965 A2 offenbart eine Vorrichtung und ein Verfahren zur Herstellung von Zahnersatz, mit der und bei dem die Datensätze konfektionierter Zähne in ein virtuelles Modell der Mundsituation eingepasst werden, wobei die Möglichkeit der darauffolgenden direkten Herstellung der Prothesenbasis oder des Einsetzens der konfektionierten Zähne in das Modell besteht.

US 7,153,135 B1 offenbart ein Verfahren zum Herstellen eines entfernbaren Zahnersatzes aus Plastik, der basierend auf digitalen Bilddaten der Mundhöhle mittels Rapid-Prototyping hergestellt werden kann. Zusätzliche digitale Daten können zu den Bilddaten hinzugefügt und die kombinierten Daten können als ein zusammengesetztes Bild auf einem Computer dargestellt werden.

DE 40 25 728 A1 offenbart ein Verfahren zur Herstellung einer Zahnprothese mit einer mit einer Dateneingabeeinheit versehenen Fräseinrichtung, wobei mittels der Daten einer dreidimensionalen Aufnahme der Mundhöhle eines Patienten ein der Topographie und Kontur der Mundhöhle entsprechender Konstruktionsplan erstellt wird, der in die Dateneingabeeinheit einer Fräsmaschine eingegeben wird. Entsprechend diesen Daten wird eine Basis für eine Zahnprothese gefräst. Im Weiteren dient diese Basis für den Zahnaufbau in Wachs, wobei ein Negativabdruck erstellt wird, wobei die Zähne in dem Abdruck verbleiben und dann von diesem Negativabdruck ein der Kontur und der Topographie entsprechender Konstruktionsplan erstellt wird, der die Grundlage für einen weiteren Fräsvorgang zur Erstellung der Prothese darstellt.

Aufgabe der vorliegenden Erfindung ist es, die Herstellung von einem künstlichen Gebiss, bzw. von einem Basisteil hiervon, zu verbessern.

Diese Aufgabe wird gelöst mit einem Verfahren nach Anspruch 1 und einem Verfahren nach Anspruch 9. Bevorzugte Ausführungsform sind in den jeweiligen abhängigen Ansprüchen offenbart.

Bei dem Verfahren zum Herstellen von einem (herausnehmbaren) künstlichen Gebiss wird das Basisteil mit einem computergestützten Herstellungsverfahren hergestellt. Bei dem Verfahren wird eine Form des Zahnfleischareals oder eines Modells davon durch Abscannen erfasst, wobei die Innenform des Basisteils anhand der Form des Zahnfleischareals oder des Modells davon festgelegt wird. Die Außenform des Basisteils wird durch Abscannen eines Modells des Basisteils festgelegt, das Modell des Basisteils wird auf ein/das Modell des Zahnfleischareals aufgebaut und anschließend mit Scannen erfasst, sodass ein Datensatz zur Verfügung steht, der die Form des Modells des Basisteils widergibt.

Ein Modell des Basisteils kann z.B. mit Wachs auf ein Modell des Zahnfleischareals aufgebaut werden.

Das computergestützte Herstellungsverfahren für das Basisteil kann ein Rapidprototyping-Verfahren sein. Allgemein ist ein Rapidprototyping-Verfahren ein Urformverfahren, bei dem das Werkstück (z. B. schichtweise) aus formlosen oder formneutralen Materialien unter Nutzung physikalischer und/oder chemischer Effekte aufgebaut wird. Ein solches Rapidprototyping-Verfahren kann zum Beispiel die 3D-Lithographie und hierbei insbesondere die 3D-Laserlithographie sein. Weitere Beispiele für Rapidprototyping-Verfahren sind Stereolithographie, selektives Lasersintern, Lasergenerieren, Fused Deposition Modelling, Laminated Object Modelling, 3D-Printing, Contour Crafting, Multijet Modelling oder Polyjet-Verfahren.

Bei der 3D-Laserlithographie wird beispielsweise ein Kunstharz lokal mit einem Laser erhitzt bzw. durch die Laserlichteinstrahlung wird eine chemische Reaktion ausgelöst, sodass das flüssige Material sich verfestigt. Auch ein Aufschmelzen aus einem pulverförmigen Material, was sich beim Abkühlen dann in zusammengeschmolzener Form verhärtet, kann hier eingesetzt werden.

Auch computergestützte abtragende oder auftragende Herstellungsverfahren können eingesetzt werden. Ein Beispiel für ein abtragendes computergestütztes Verfahren ist das computergestützte Fräsen. Bei auftragenden computergestützten Herstellungsverfahren werden Materialschichten, Lagen oder Teile nacheinander aufgetragen, um so das Werkstück herzustellen.

Das flüssige oder pulverförmige Material das bei einem Rapidprototyping-Verfahren oder auch einem anderen auftragenden Verfahren eingesetzt wird, kann beispielsweise vor dem Formen bereits einen zahnfleischfarbenen Farbton oder einen zahnfarbenen Farbton aufweisen. Falls mit dem (Rapidprototyping-)Verfahren nur das Basisteil hergestellt wird, kann durch eine solche Farbgebung bereits der gewünschte Farbton, also insbesondere ein zahnfleischfarbener Farbton, ohne weitere Nachbehandlung erreicht werden. Auch ist es möglich während des Rapid-prototyping-Verfahrens den erzielten Farbton zu wechseln, z.B. von zahnfleischfarben auf zahnfarben und/oder von einer ersten Zahnfleischfarbe auf eine oder mehrere andere Zahnfleischfarben und/oder von einer Zahnfarbe auf eine oder mehrere andere Zahnfarben.

Andererseits ist es jedoch auch möglich, dass ein mit einem (Rapidprototyping-)Verfahren hergestelltes Basisteil noch ganz oder teilweise nachgefärbt wird, um einen gewünschten Farbton, insbesondere einen zahnfleischfarbenen Farbton, bzw. Farbschattierungen, Fahrverläufe etc., zu erreichen.

Weiterhin ist vorteilhaft ein Verfahren, bei dem mit dem (Rapidprototyping-)Verfahren auch Zähne des künstlichen Gebisses hergestellt werden. Diese können einstückig (aber evtl. vorteilhafterweise mit mindestens zwei verschiedenen Farben) mit dem Basisteil hergestellt werden oder aber auch separat hiervon. Auf diese mit dem (Rapidprototyping-)Verfahren hergestellten Zähne können eine oder mehrere Farbschichten und/oder eine oder mehrere andere Schichten, die z.B. die Verschleißfestigkeit erhöhen, aufgebracht werden. Farbschichten können auch auf das Basisteil aufgebracht werden.

Da die Materialanforderungen an das Basisteil und an die künstlichen Zähne in der Regel recht verschieden sind und insbesondere die Zähne in Bezug auf Bruch- und Verschleißfestigkeit sehr hohe Anforderungen erfüllen müssen, ist es ebenfalls vorteilhaft, wenn vorgefertigte künstliche Zähne für das künstliche Gebiss vorgesehen werden. Diese können mit dem Basisteil in geeigneter Weise verbunden werden. Sie können beispielsweise auch eingesetzt werden. Zum Verbinden kann ein Kleber vorgesehen sein und/oder mechanische Verbindungsmittel, wie etwa eine Schraube, ein Gewinde, ein Stift, ein Bajonettverschluss oder sonstige mechanische Verbindungsmittel.

Etwaige Befestigungsmittel an dem Basisteil zum Befestigen der künstlichen Zähne oder Zahnverblendungen können vorzugsweise einstückig mit dem Basisteil ausgebildet werden. Sie werden vorteilhafterweise mit ein und demselben Rapidprototyping-Verfahren hergestellt, mit dem auch das Basisteil selbst hergestellt wird.

Die Form des Basisteils, bzw. die Form des künstlichen Gebisses bzw. ein oder mehrere entsprechende Datensätze hierzu werden vorteilhafterweise dauerhaft archiviert. Damit ist es z. B. möglich, dass später, wenn das künstliche Gebiss abgenutzt ist, ein neues, aber identisches, künstliches Gebiss hergestellt wird. Dies kann z. B. auf Anforderung von einem Patienten (oder auch seinen Zahnarzt) geschehen. Die Anforderung kann z. B. über Internet eingehen, bzw. das neue Gebiss per Internet bestellt werden.

Die Erfindung betrifft auch ein Verfahren zum Erstellen von einem Datensatz, der die Form eines Basisteils eines künstlichen Gebisses oder die Form eines künstlichen Gebisses mit einem Basisteil angibt, bei dem a) eine Form eines Zahnfleischareals oder eines Modells davon durch Abscannen erfasst wird, wobei die Innenform des Basisteils anhand der Form des Zahnfleischareals oder des Modells davon festgelegt wird, b) die Außenform des Basisteils durch Abscannen eines Modells des Basisteils festgelegt wird, wobei das Modell des Basisteils auf ein/das Modell des Zahnfleischareals aufgebaut und anschließend mit Scannen erfasst wird.

Ein Datensatz zur Herstellung eines Basisteils kann entweder lokal weitergeleitet werden an eine Rapidprototyping-Vorrichtung oder eine andere computergestützte Herstellungsvorrichtung oder er kann per Datenfernübertragung an ein Herstellungszentrum verschickt werden, das diesen Datensatz dann beispielsweise dazu einsetzt, ein Rapidprototyping-Verfahren oder ein anderes computergestütztes Herstellungsverfahren durchzuführen, um das Basisteil herzustellen.

Bevorzugte Ausführungsformen der Erfindung sollen anhand der beiliegenden Figuren erläutert werden. Dabei zeigt:
- Figur 1: ein künstliches Gebiss;
- Figur 2: verschiedene Varianten von Basisteilen;
- Figur 3: verschiedene Schnittansichten von künstlichen Gebissen;
- Figur 4: eine schematische Darstellung von Komponenten zur Durchführung von Verfahren oder Verfahrensschritten.

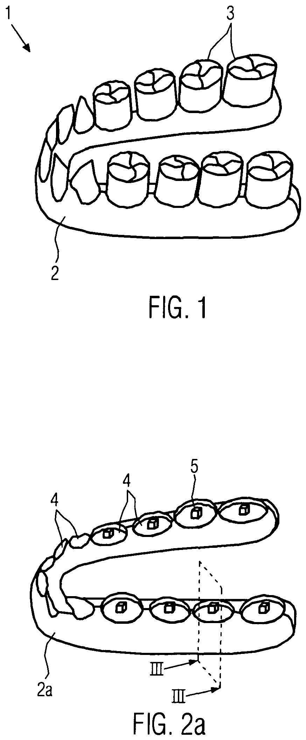

Figur 1 zeigt ein künstliches Gebiss 1 mit einem Basisteil 2 und künstlichen Zähnen 3. Das Basisteil 2 soll vorzugsweise zahnfleischfarben sein und die Zähne 3 vorzugsweise zahnfarben, d. h. im Wesentlichen in einem Weißton gehalten.

Ein solches künstliches Gebiss kann für den Ober- oder den Unterkiefer vorgesehen sein. Während in Figur 1 ein Vollgebiss dargestellt ist, bei dem sämtliche Zähne eines Kiefers ersetzt werden, kann auch nur ein Teilgebiss vorgesehen sein, das nur einen Teil des Kiefers abdeckt und so nur einen Teil der Zähne ersetzt.

Die Zähne 3 können einstückig mit dem Basisteil 2 ausgebildet sein. Sie können aber auch nicht einstückig mit dem Basisteil 2 ausgebildet sein. Das Basisteil 2 selbst ist vorzugsweise einstückig, kann aber auch zwei-, drei- oder noch mehrstückig sein.

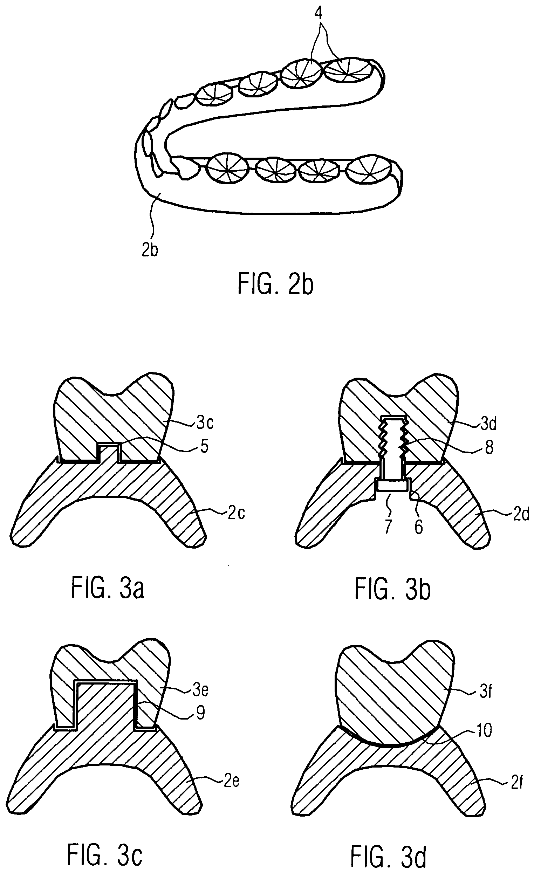

In Figur 2 a ist ein Basisteil 2a gezeigt, in dem Öffnungen bzw. Vertiefungen 4 vorgesehen sind, in die künstliche Zähne eingesetzt werden. Weiterhin ist im Bereich der Backenzähne ein Befestigungsmittel 5 dargestellt, das vorzugsweise einstückig mit dem Basisteil 2a ausgebildet ist. Nähere Erläuterungen zu den Befestigungsmitteln sind in der Beschreibung der Figur 3 enthalten.

In Figur 2b ist ein Basisteil 2b gezeigt, bei dem Vertiefungen 4 für die Aufnahme der jeweiligen künstlichen Zähne vorgesehen sind. Besondere weitere Befestigungsmittel 5 sind hier nicht vorgesehen.

In Figur 3 sind verschiedene Schnitte dargestellt und zwar an einer Stelle, wie sie in Figur 2 a unter III. eingezeichnet ist. In Figur 3 a ist ein Basisteil 2c im Schnitt zu erkennen, dessen Unterseite (die Innenseite) unregelmäßig geformt ist und zwar in Abhängigkeit von dem Zahnfleischareal, auf welches das künstliche Gebiss aufgesetzt werden soll. Die seitliche Außenseite ist nach ästhetischem und Stabilitätsgesichtspunkten gestaltet. Auf der Oberseite des Basisteils 2c ist ein künstlicher Zahn 3c angeordnet, der an seinem unteren Ende einer Ausnehmung aufweist, in die das Befestigungsmittel 5 eingeschoben werden kann. Der künstliche Zahn 3c kann beispielsweise aufgeklebt werden. Durch das würfelförmige Befestigungsmittel 5 kann ein Verdrehen des künstliches Zahns 3 gut verhindert werden bzw. kann die Position des künstliches Zahns 3c beim Einkleben genau definiert werden.

In Figur 3b ist eine alternative Ausführungsform gezeigt, bei der ein künstlicher Zahn 3d mit einem Innengewinde 8 versehen ist, in das eine Schraube 7 eingreift. In dem Basisteil 2d ist eine Vertiefung 6 vorgesehen, in der sich der Kopf der Schraube 7 im befestigten Zustand befindet. Die Öffnung 6 kann nach dem Einsetzen und Festziehen der Schraube 7 auch verfüllt werden.

In Figur 3c ist eine Variante gezeigt, bei der auf der Oberseite des Basisteils 2e ein Sockel 9 vorgesehen ist, auf dem lediglich eine Zahnverblendung 3e aufgesetzt ist. Diese künstliche Zahnverblendung 3e gibt einen entsprechenden Farbton für Zähne wieder und gewährleistet eine hohe Verschleißfestigkeit. Hier können beispielsweise Porzellanmaterialien, Keramikmaterialien oder Ähnliches eingesetzt werden. Der Sockel für eine Zahnverblendung weist ein Volumen von mindestens 30 %, 50 %, 70 %, 80 % oder 90 % des Volumens auf, das von der Verblendung eingenommen und/oder umhüllt wird.

Figur 3d zeigt eine weitere Variante, bei der an der Oberseite des Basisteils 2f eine runde Vertiefung 10 vorgesehen ist, in die ein künstlicher Zahn 3f eingeklebt werden kann.

Die Variante der Figur 3d entspricht in etwa der Form eines Basisteils aus der Figur 2 b.

Die jeweilige Form der Vertiefung 4 und/oder der Befestigungsmittel 5, 6, 9, 10 können aus vorbekannten Daten bestimmt werden. Bei vorgefertigten Zähnen ist die Form des Zahns bekannt, sodass die benötigte Form des Basisteils ebenfalls bekannt ist. Diese ist vorzugsweise in einer elektronischen Bibliothek oder Datei oder Datenbank hinterlegt und kann zur Modellierung des Basisteils abgerufen werden.

Die für die jeweiligen Zähne benötigte Form kann in einen Datensatz, der das Basisteil beschreibt, eingefügt werden, wobei der Datensatz (unter anderem) durch Abscannen eines Modells oder durch Modellierung eines Basisteils im Computer entstanden sein kann.

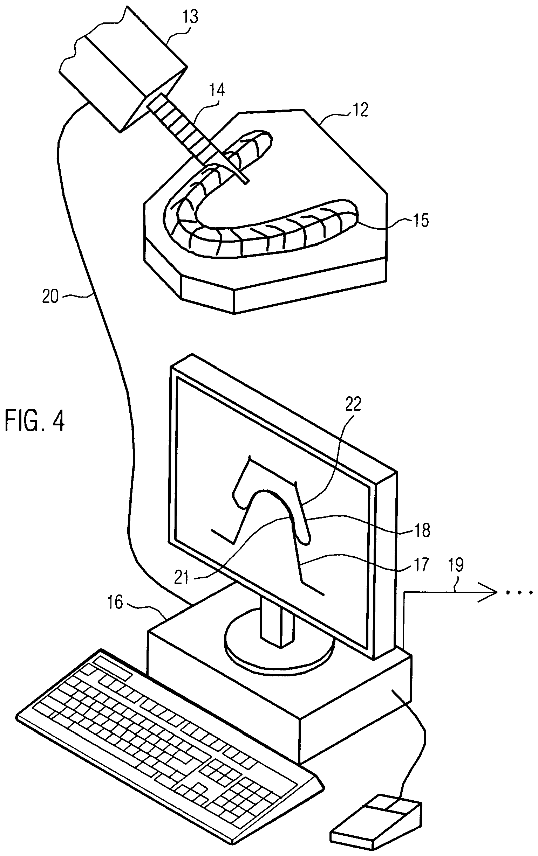

In Figur 4 ist ein Scanner 13 (hier als Beispiel ein optischer Scanner) dargestellt, mit dem eine Form eines Modells oder eines Zahnfleischareals abgetastet werden kann. In Figur 4 ist ein Modell 12 vorgesehen, das auf seiner Oberseite einen Bereich 15 aufweist, der die Form eines Zahnfleischareals wiedergibt. Dieser Bereich kann mit dem Scanner 13 abgetastet werden (siehe beispielhaft den Lichtstrahl 14). Die Daten des Scanners 13 können an einen Rechner 16 übertragen werden. Hierzu ist eine Datenverbindung 20 (eine kabelbehaftete oder drahtlose Datenverbindung) vorgesehen. Auf dem Monitor des Computers 16 ist ein Datensatz 17, der die Form des Zahnfleischbereichs 15 wiedergibt, dargestellt. Weiterhin ist auf dem Monitor ein Datensatz 18 dargestellt, der die Form eines Basisteils angibt. Dieser Datensatz 18 kann auf dem Computer durch Simulation ausgehend von dem Datensatz 17 erstellt werden. Die Innen- bzw. Unterseite 21 des Datensatzes 18 (also derjenige Bereich, der dem Zahnfleischareal zugewandt sein wird bzw. mit diesem in Kontakt kommen wird) wird vorzugsweise aufgrund der erfassten Daten 17 geformt. So ergibt sich eine optimale Passgenauigkeit. Durch die Außenseite 22 wird die Dicke des Basisteils und damit seine Stabilität festgelegt. Auf dem Modell 12 kann aber auch ein Basisteil auf den Bereich 15 aufmodelliert werden. Dieses kann mit dem Scanner 13 abgetastet werden und so die Form für die Außenseite 18 des Basisteils erarbeitet werden. Solche durch Abscannen gewonnenen Daten können mit einem Computer nachbearbeitet werden (z. B. Änderung der Innen- oder Außenseite, Einfügen von Formelementen für künstliche Zähne, wie Vertiefungen oder Befestigungsmittel, etc.).

Besonders vorteilhaft ist beispielsweise ein Verfahren, bei dem zunächst der Bereich 15 abgetastet wird, um die Daten für die Innenseite 21 des Basisteils zu gewinnen und anschließend entweder die Außenseite 22 in dem Computer 16 simuliert wird oder ein Modell auf dem Bereich 15 aufmodelliert wird und dieses abgescannt wird, um die Daten für die Außenseite 22 zu erhalten. Auch Kombinationen dieser beiden letzten Verfahrensvarianten sind möglich, in dem beispielsweise ein Modell des Basisteils abgescannt wird, dieses anschließend jedoch noch am Computer nachbearbeitet wird. Mit einer Nachbearbeitung können beispielsweise insbesondere die Befestigungsmittel für die künstlichen Zähne ergänzt werden.

Ein Datensatz 18, der die Form eines Basisteils angibt, kann mit Datenübertragungsmitteln 19 beispielsweise mit einem Internetanschluss per Datenfernübertragung an ein Herstellungszentrum für Basisteile verschickt werden. Der Datensatz 18 kann aber auch lokal an ein Rapidprototyping-System weitergeleitet werden, welches dann ein entsprechendes Basisteil herstellt.

Die Daten, die die hergestellten Teile (Basisteil, Zähne, künstliches Gebiss, etc.) beschreiben, oder andere Daten, die zur Herstellung der Teile dienen können, können langfristig (ein, zwei, drei, vier, fünf oder mehr Jahre) archiviert werden. Dadurch können die Daten zur Herstellung eines zweiten oder weiteren künstlichen Gebisses herangezogen werden. Die Archivierung erfolgt vorzugsweise nicht auf dem Rechner 16, sondern vielmehr auf einem Massendatenspeicher, wie etwa einer beschreibbaren CD, DVD, einem Magnetband, einem Datastore oder Ähnlichem.

Auf ein Basisteil, wie es in Figur 2b dargestellt ist, können eine oder mehrere Farbschichten aufgetragen werden. Damit können gewünschte Farbverläufe, Farbschattierungen und Farbnuancen erreicht werden, wie dies beispielsweise von einem Zahntechniker durchgeführt werden kann.

Farbschichten oder Schichten, die die Verschleißfestigkeit erhöhen, können auch auf die künstlichen Zähne bzw. den Sockel (siehe Figur 3c) von einem Zahntechniker aufgebracht werden.

## Patentansprüche

1. Verfahren zum Herstellen von einem Basisteil (2) eines künstlichen Gebisses (1) oder von einem künstlichen Gebiss, das ein Basisteil aufweist, wobei das Basisteil (2) auf ein Zahnfleischareal aufsetzbar ist:
wobei eine Form des Zahnfleischareals oder eines Modells (12) davon durch Abscannen erfasst wird, wobei die Innenform des Basisteils (2) anhand der Form des Zahnfleischareals oder des Modells (12) davon festgelegt wird,
**dadurch gekennzeichnet, dass**
die Außenform des Basisteils (2) durch Abscannen eines Modells des Basisteils (2) festgelegt wird, das Modell des Basisteils (2) auf ein/das Modell (12) des Zahnfleischareals aufgebaut und anschließend mit Scannen erfasst wird, sodass ein Datensatz zur Verfügung steht, der die Form des Modells des Basisteils (2) wiedergibt, das Basisteil (2) mit einem computergestützten Herstellungsverfahren hergestellt wird.

2. Verfahren nach Anspruch 1, **dadurch gekennzeichnet, dass** das Material, aus dem das Basisteil (2) geformt wird, bereits vor dem Formen einen zahnfleischfarbenen oder einen zahnfarbenen Farbton aufweist.

3. Verfahren nach Anspruch 1 oder 2, **dadurch gekennzeichnet, dass** das Basisteil (2) nach oder während dem Formen gefärbt wird, vorzugsweise zahnfleischfarben.

4. Verfahren nach einem der Ansprüche 1 bis 3, **dadurch gekennzeichnet, dass** mit dem computergestützten Herstellungsverfahren auch die Zähne (3) des künstlichen Gebisses (1) hergestellt werden, wobei die Zähne (3) separat von dem Basisteil (2) hergestellt werden.

5. Verfahren nach einem der Ansprüche 1 bis 4, **dadurch gekennzeichnet, dass** vorgefertigte künstliche Zähne in das Basisteil eingesetzt und/oder mit diesem verbunden werden und zwar vorzugsweise mit einem Kleber oder einem mechanischen Verbindungsmittel, wie etwa einer Schraube (7), einem Gewinde (8), einem Stift (5, 9), einem Bajonettverschluss oder ähnlichem.

6. Verfahren nach einem der Ansprüche 1 bis 5, **dadurch gekennzeichnet, dass** das Basisteil (2) mit Befestigungsmitteln (5, 9) für künstliche Zähne (3) oder Zahnverblendungen (3e) geformt wird, wobei die Befestigungsmittel (5, 9) vorzugsweise einstückig mit dem Basisteil geformt werden.

7. Verfahren nach einem der Ansprüche 1 bis 6, **gekennzeichnet durch** ein zweites Formen des Basisteils und/oder der künstlichen Zähne mit einem computergestützten Herstellungsverfahren, wie etwa mit einem Rapidprototyping-Verfahren, wie z.B. der 3D-Lithographie und insbesondere der 3D-Laserlithographie, einem computergestützten Fräsen oder einem anderen abtragenden oder auftragenden computergestützten Herstellungsverfahren, wobei das zweite Formen vorzugsweise auf einen Abruf des Patienten und/oder eines Zahnarztes hin erfolgt und/oder vorzugsweise mehr als ein, zwei, drei, vier, fünf oder mehr Jahre nach dem ersten Formen erfolgt.

8. Verfahren nach einem der Ansprüche 1 bis 7, **dadurch gekennzeichnet, dass** das computergestützte Herstellungsverfahren zum Formen des Basisteils ein Rapidprototyping-Verfahren ist, wie z.B. der 3D-Lithographie und insbesondere der 3D-Laserlithographie, einem computergestützten Fräsen oder einem anderen abtragenden oder auftragenden computergestützten Herstellungsverfahren.

9. Verfahren zum Erstellen von einem Datensatz, der die Form eines Basisteils (2) eines künstlichen Gebisses (1) oder die Form eines künstlichen Gebisses mit einem Basisteil angibt, bei dem
a) eine Form eines Zahnfleischareals oder eines Modells (12) davon durch Abscannen erfasst wird, wobei die Innenform des Basisteils (2) anhand der Form des Zahnfleischareals oder des Modells (12) davon festgelegt wird,
**dadurch gekennzeichnet, dass**
b) die Außenform des Basisteils (2) durch Abscannen eines Modells des Basisteils (2) festgelegt wird, wobei das Modell des Basisteils (2) auf ein/das Modell (12) des Zahnfleischareals aufgebaut und anschließend mit Scannen erfasst wird, sodass ein Datensatz zur Verfügung steht, der die Form des Modells des Basisteils wiedergibt.

10. Verfahren nach Anspruch 9, **dadurch gekennzeichnet, dass** der Datensatz zur Herstellung eines Basisteils (2) lokal weitergeleitet oder per Datenfernübertragung (19) verschickt wird.

## Claims

1. A method of producing a base part (2) of a set of artificial teeth (1), or a set of artificial teeth having a base part, where the base part (2) is fittable on a gum area:
where a shape of the gum area or a model (12) thereof is obtained by scanning, where the inner shape of the base part (2) is defined by the shape of the gum area or the model (12) thereof,
**characterised in that**
the outer shape of the base part (2) is defined by scanning a model of the base part (2), the model of the base part (2) is built onto a/the model (12) of the gum area and afterwards is obtained by scanning such that a data set is provided that represents the shape of the model of the base part (2),
the base part (2) is formed by a computer-aided production process.

2. The method according to claim 1, **characterised in that** the material used for forming the base part (2) has, already prior to the forming, a gum-coloured or a tooth-coloured hue.

3. The method according to claim 1 or 2, **characterised in that** the base part (2) is dyed after or during the forming, preferably such that it assumes the colour of gums.

4. The method according to one of the claims 1 to 3, **characterised in that** also the teeth (3) of the set of artificial teeth (1) are formed by the computer-aided production process, the teeth (3) being formed separately of the base part (2).

5. The method according to one of the claims 1 to 4, **characterised in that** prefabricated artificial teeth are inserted in the base part and/or connected thereto, preferably with an adhesive or mechanical connection means, such as a screw (7), a thread (8), a pin (5, 9), a bayonet joint or the like.

6. The method according to one of the claims 1 to 5, **characterised in that** the base part (2) is formed with fastening means (5, 9) for artificial teeth (3) or tooth veneers (3e), the fastening means (5, 9) being preferably formed integrally with the base part.

7. The method according to one of the claims 1 to 6, **characterised by** a second forming of the base part and/or of the artificial teeth by a computer-aided production process, such as a rapid prototyping process, e.g. 3D lithography and, in particular, 3D laser lithography, a computer-aided milling or some other removing or applying computer-aided production process, the second forming being preferably carried out on demand of the patient and/or of a dentist and/or preferably executed more than one, two, three, four, five or more years after the first forming.

8. The method according to one of claims 1 to 7, **characterised in that** the computer-aided production process for forming the base part is a rapid prototyping method, such as, e.g., the 3D lithography and specifically the 3D laser lithography, a computer-aided milling or another removing or applying computer-aided production process.

9. A method for generating a data set defining the shape of a base part (2) of a set of artificial teeth (1) or the shape of a set of artificial teeth with a base part in which
(a) a shape of a gum area or a model (12) thereof is obtained by scanning, where the inner shape of the base part (2) is defined by the shape of the gum area or the model (12) thereof, **characterized in that**
(b) the outer shape of the base part (2) is defined by scanning of a model of the base part (2), the model of the base part (2) being built onto a/the model (12) of the gum area and afterwards being obtained by scanning such that a data set is provided that represents the shape of the model of the base part.

10. The method according to claim 9, **characterised in that** the data set for producing a base part (2) is transmitted locally or through remote data transmitting (19).

## Revendications

1. Procédé de fabrication d'une partie de base (2) d'un dentier artificiel (1), ou d'un dentier artificiel, qui présente une partie de base, la partie de base (2) pouvant être appliquée sur une zone de gencive :
d'après lequel on relève une forme de la zone de gencive ou d'un modèle (12) de celle-ci, par scannage, la forme intérieure de la partie de base (2) étant fixée à partir de la forme de la zone de gencive ou du modèle (12) de celle-ci,
**caractérisé en ce que**
la forme extérieure de la partie de base (2) est fixée par scannage d'un modèle de la partie de base (2),
le modèle de la partie de base (2) est construit sur un/le modèle (12) de la zone de gencive et est ensuite relevé par scannage, de sorte que l'on dispose d'un jeu de données, qui reproduit la forme du modèle de la partie de base (2), et
la partie de base (2) est fabriquée à l'aide d'un procédé de fabrication assisté par ordinateur.

2. Procédé selon la revendication 1, **caractérisé en ce que** le matériau à partir duquel est façonné la partie de base (2) présente, déjà avant le façonnage, une teinte correspondant à une teinte de gencive ou une teinte de dent.

3. Procédé selon la revendication 1 ou la revendication 2, **caractérisé en ce que** la partie de base (2) est teintée après ou pendant le façonnage, de préférence par des teintes de gencive.

4. Procédé selon l'une des revendications 1 à 3, **caractérisé en ce qu'**à l'aide du procédé de fabrication assisté par ordinateur, on fabrique également les dents (3) du dentier artificiel (1), les dents (3) étant fabriquées séparément de la partie de base (2).

5. Procédé selon l'une des revendications 1 à 4, **caractérisé en ce que** des dents artificielles préfabriquées sont implantées dans la partie de base et/ou liées à celle-ci, et cela de préférence à l'aide d'une colle ou d'un moyen de liaison mécanique, comme par exemple une vis (7), un filetage (8), une broche (5, 9), une liaison du type à baïonnette ou similaire.

6. Procédé selon l'une des revendications 1 à 5, **caractérisé en ce que** la partie de base (2) est façonnée de manière à comporter des moyens de fixation (5, 9) pour des dents artificielles (3) ou des couronnes dentaires (3e), les moyens de fixation (5, 9) étant de préférence façonnées d'un seul tenant avec la partie de base.

7. Procédé selon l'une des revendications 1 à 6, **caractérisé par** un deuxième façonnage de la partie de base et/ou des dents artificielles à l'aide d'un procédé de fabrication assisté par ordinateur, comme par exemple un procédé de prototypage rapide, tel que par exemple une lithographie 3D et notamment une lithographie laser 3D, un fraisage assisté par ordinateur ou bien un autre procédé de fabrication par enlèvement ou apport de matière, assisté par ordinateur, le deuxième façonnage étant effectué de préférence suite à une demande du patient et/ou d'un dentiste, et/ou effectué de préférence plus d'un, deux, trois, quatre, cinq ans ou davantage après le premier façonnage.

8. Procédé selon l'une des revendications 1 à 7, **caractérisé en ce que** le procédé de fabrication assisté par ordinateur pour le façonnage de la partie de base est un procédé de prototypage rapide, comme par exemple une lithographie 3D et notamment une lithographie laser 3D, un fraisage assisté par ordinateur ou bien un autre procédé de fabrication par enlèvement ou apport de matière, assisté par ordinateur.

9. Procédé pour établir un jeu de données, qui indique la forme d'une partie de base (2) d'un dentier artificiel (1) ou la forme d'un dentier artificiel avec une partie de base, d'après lequel
a) on relève une forme de la zone de gencive ou d'un modèle (12) de celle-ci, par scannage, la forme intérieure de la partie de base (2) étant fixée à partir de la forme de la zone de gencive ou du modèle (12) de celle-ci,
**caractérisé en ce que**
b) la forme extérieure de la partie de base (2) est fixée par scannage d'un modèle de la partie de base (2), le modèle de la partie de base (2) est construit sur un/le modèle (12) de la zone de gencive et est ensuite relevé par scannage, de sorte que l'on dispose d'un jeu de données, qui reproduit la forme du modèle de la partie de base.

10. Procédé selon la revendication 9, **caractérisé en ce que** le jeu de données est, en vue de la fabrication d'une partie de base (2), transmis localement ou bien envoyé par transmission de données (19) .
